# EUROPEAN PATENT APPLICATION

(11) **EP 2 667 348 A1**
(43) Date of publication of application: **27.11.2013**
(21) Application number: 13168619.8
(22) Date of filing: 21.05.2013
(51) Int. Cl.: G06Q 30/08

(54) **Reverse auction system, method and computer program product**

(30) Priority: 22.05.2012 TW 101118208; 10.05.2013 TW 102116716
(71) Applicant: Microip Inc., Victoria, Mahe (SC)
(72) Inventor: Huang, Chia-Fen, 302 Zhubei City, Hsinchu County (TW); Yeh, Yu-Ju, 302 Zhubei City, Hsinchu County (TW)
(74) Representative: Hintermeyer, Julia

(57) **Abstract**

A reverse auction system of the present disclosure is provided and includes an account module, a server center, a searching module, a publishing module, and a bidding module. The account module registers or charges a desired article request from a buyer side. The server center converts the desired article request into publishing data and searching data. The searching module connects to at least one auction website for collaborating therewith to perform comparison in accordance with the searching data, and then returns a feedback signal of a comparison result. Furthermore, the publishing module publishes the publishing data, and then the bidding module offers a platform to the suppliers or bidders to bid for the buyer's desired article described in the publishing data. The work of the publishing module and the bidding module is in parallel with the work of the searching module.

## Description

### BACKGROUND

### Field of Invention

The present invention relates to a networked-computer system, a method using the same and a computer program product. More particularly, the present invention relates to a reverse auction system, a reverse auction method, and a reverse auction computer program product.

### Description of Related Art

In a standard flow of a current Internet auction, a seller has to register an article to be auctioned, and then buyers bid for the article. The buyer who offers the highest price wins and gets the article. Such an auction process mentioned above, however, is only available in a one-way, that is, sellers offer articles for buyers to bid for, and the buyers can only choose the articles and specifications registered by the sellers. Therefore, if an article with different specifications of which a buyer is desired to purchase, the buyer has to search the article through different auction websites for the desired article; it is trivial and hard to search the article among listed articles one-by-one through variable types of auction websites with variable languages. In addition, if the buyer is too lazy or too busy to shop online, it is quite difficult and trivial to process a one-by-one search of desired articles through variable auction websites. In short, although buyers are desired to purchase something, it is still hard to find desired articles one-by-one among articles listed in variable websites.

To overcome the aforementioned defects, recently, a slightly improved Internet auction processing system has been provided, in which sellers register for their offered articles, and then buyers inquire for their desired articles. Afterwards, the auction system matches and operates the requirements to make a deal. Although such a type of auction satisfies some buyers, yet most buyers are still hard to designate desired articles from sellers. Thus, it is yet to bring Internet auctions into full play.

### SUMMARY

In view of the foregoing, a reverse auction system, a reverse auction method, and a reverse auction computer program product are provided in the present disclosure for overcoming requirements which is unlikely to be achieved by the conventional or the aforementioned improved auction systems.

The present disclosure includes a reverse auction system, a reverse auction method, and a reverse auction computer program product. The main purpose of the present disclosure is to satisfy variable requirements of buyers, no matter if the requirements are tangible or intangible, to provide one-to-one or one-to-many deals of auctions among any users browsing through web, and thus to enhance an auction efficiency.

Based on the purpose mentioned above, the reverse auction system of the present disclosure is applicable to a networked-computer environment and includes an account module, a server center, a searching module, a publishing module, and a bidding module. A buyer side may register their desired article request via the account module, and then, optionally, the account module may charge the buyer side, the seller side, or both of the buyer side and seller side if a deal is done. The server center converts the desired article request into publishing data and searching data, and then those data are sent to the publishing module and the searching module respectively for further processing. The searching module can be externally connected to at least one auction website for collaborating with the auction website to perform comparison in accordance with the searching data, and then to return a feedback signal of comparison result. Meanwhile, the publishing data may be published to the public by the publishing module, and then a bid may be placed by numerous seller sides according to the buyer's desired article request described in the publishing data. Besides, if none of the auction websites are connected to the searching module, the publishing module may still be operated normally and independently. In another word, both of the publishing module and the searching module may be operated in parallel.

The searching module described above collaborates with one or multiple auction websites to perform comparison in accordance with the searching data, and the comparison types include the following two types:
1. The searching module submits the searching data to the auction websites, and performs a comparison in accordance with the searching data by the auction website, and then returns a feedback signal of the comparison result.
2. If the databases of the auction websites are open and free to access, the searching module submits the searching data to the databases of the auction websites and performs a comparison in accordance with the searching data by the searching module, and then returns a feedback signal of the comparison result.

The bidding module of the reverse auction system of the present disclosure can offer one or numerous seller side to place a bid according to the desired article request. When the bidding fails, the bidding module collaborates with the account module to confirm with the buyer side for choosing to return the desired article request back to the server center for repeating the bidding, or to denote a bidding failure signal on the publishing module directly.

It is worth to be mentioned that the form of the content of the aforementioned desired article request may be a video clip, an audio clip, or a text description. By offering various kinds of the desired article request, and by operating the publishing module, the bidding module, and the searching module, the Internet-based auctions may be brought into full play; the buyers will not need to spend a lot of time for searching for their articles of interest through the Internet, and the buyers may acquire for various kinds of articles of interest more easily.

The reverse auction method of the present disclosure which performs the following steps may be executed by a computer:
1. Registering or charging a desired article request from a buyer side in a networked computer environment.
2. Converting the desired article request into publishing data and searching data in the networked computer environment.
3. Connecting a searching module to at least one auction website in the networked computer environment, and, parallelly, publishing the publishing data by the publishing module. If none of the auction websites are connected to the searching module, the publishing module may still be operated normally and independently.
4. Performing a comparison in accordance with the searching data by collaborating the searching module with the auction website in the networked computer environment.
5. Returning a feedback signal of comparison result to the buyer side in the networked computer environment.

By performing the reverse auction method, it is able to effectively and widely collect lots of bidders (seller sides), or effectively integrate various auction websites, such as the uBid.com and the ebay, for a wide range of desired uses; so that the desired article described in the desired article request offered by the buyer side can be more effectively, rapidly, and easily acquired.

According to another embodiment of the present disclosure of a reverse auction computer program product, the reverse auction computer program product loads and executes the steps of the aforementioned reverse auction method by a computer. The reverse auction computer program product can be stored in a recordable media.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 is a schematic diagram of modules of the present disclosure.
Fig. 2 is a flowchart of a reverse auction method of the present disclosure.
Fig. 3 is a flowchart of a bidding of the present disclosure.
Fig. 4 is a flowchart illustrating another embodiment of the present disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawings.

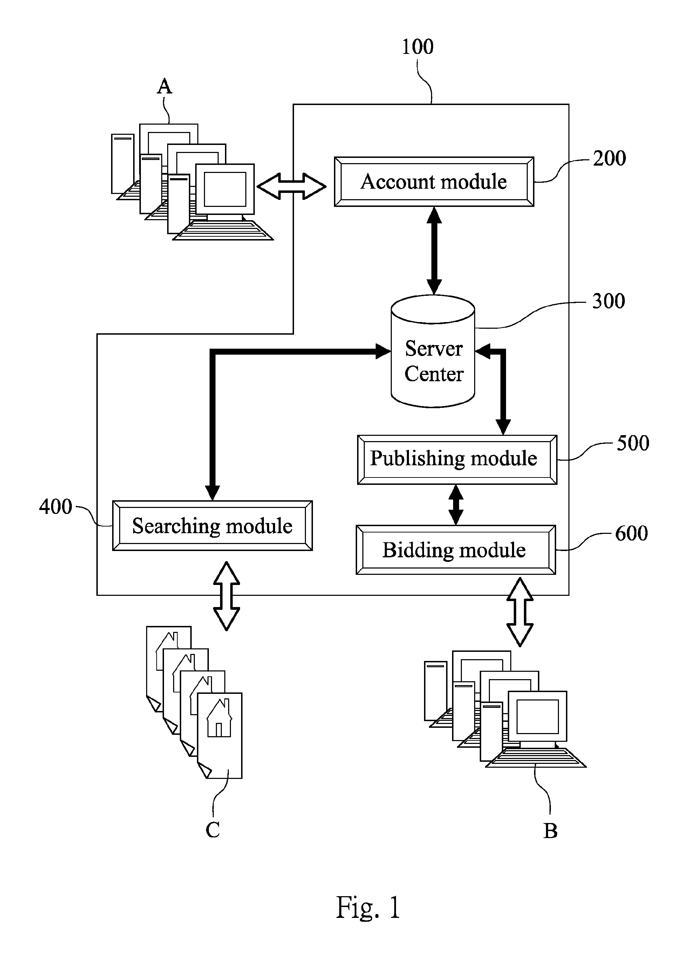

Fig. 1 is a schematic diagram of modules included in the present disclosure.

A reverse auction system 100 of the present disclosure is applicable to a networked-computer environment and includes an account module 200, a server center 300, a searching module 400, a publishing module 500, and a bidding module 600. These modules can be installed and operated in the aforementioned server computer. In addition, these modules can be Hyper Text Markup Language (HTML)-based Internet browsers, such as the Internet Explorer, or the Google Chrome, Firefox, etc. Every single computer is allowed to log in to the server computer for operating the reverse auction system 100 through the Internet browsers (ex: online auction HTML templates).

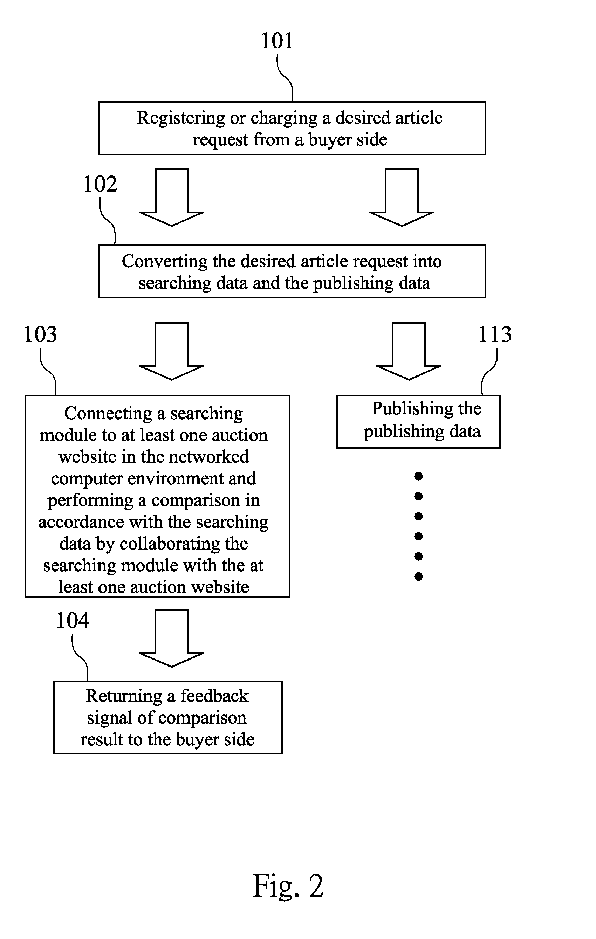

Fig.2 is a flowchart of the reverse auction method of the present disclosure. In the followings, a server computer used for executing the present disclosure belongs to a reverse auction company. Users mentioned in the followings can be any single person which is allowed to acquire or to offer different kinds of requests through the server computer; the users are mainly classified into two groups, suppliers and buyers. In addition, a supplier side and a buyer side are devices with Internet connections which can be operated by the users. Computer hardware used in the present disclosure are connected to the user's computer via the Internet.

In step 101, the account module 200 registers a desired article request and/or charges fees for such request from a buyer side A. After logging in to the server computer, the account module 200 confirms with a user whether or not to register as a buyer side A. Then, the account module 200 will denote the registration result and shows if the registration is succeeded.

Since the user has been logged in to the system as a buyer side A through the account module 200, the server center 300 will start to request the buyer side A to provide and publish a request, or to modify a published request, of a desired article. Such requests of the desired articles can be presented as video clips, audio clips, or text descriptions for bring online reverse auctions into full play. Moreover, details of such requests can even be how long a tangible object has been used, the date of production of a tangible object, the name of a tangible or an intangible object, special descriptions of a tangible or an intangible object, video clips or audio clips of a tangible or an intangible object, and an expiry period of the request of the desired article. Then, the server center 300 compiles and converts the requests of the desired articles into publishing data and searching data (see step 102) in a consistent format which conforms to Internet languages. Afterwards, slotting fees can be optionally charged from buyers by the account module 200.

The searching module 400 connects to the server center 300 to acquire the searching data. Then, in step 103, the searching module 400 externally connects to one or multiple auction websites C, such as the uBid.com and the ebay, for performing comparison of similarities between the searching data and articles of auction websites C. Afterwards, in step 104, the comparison result will be converted into a feedback signal and returns to the buyer side A. Then, according to the comparison result, the buyer side A can choose to deal through a buying process, or to set another waiting period or another search criteria for another search. Furthermore, duration of the searching process can be extended depending on such a waiting period.

The publishing module 500 acquires the publishing data from the server center 300 while connecting thereto. In step 113, the publishing data can be published as an announcement of interest to an announcement web page on the Internet by the publishing module 500 in a broadcast, a multicast, or a unicast manner. The abovementioned process of the publishing module 500 can be operated in parallel with the searching module 400. That is, if the searching module 400 is not working or not being operated, the publishing module 500 may still be operated normally and independently, and vise versa.

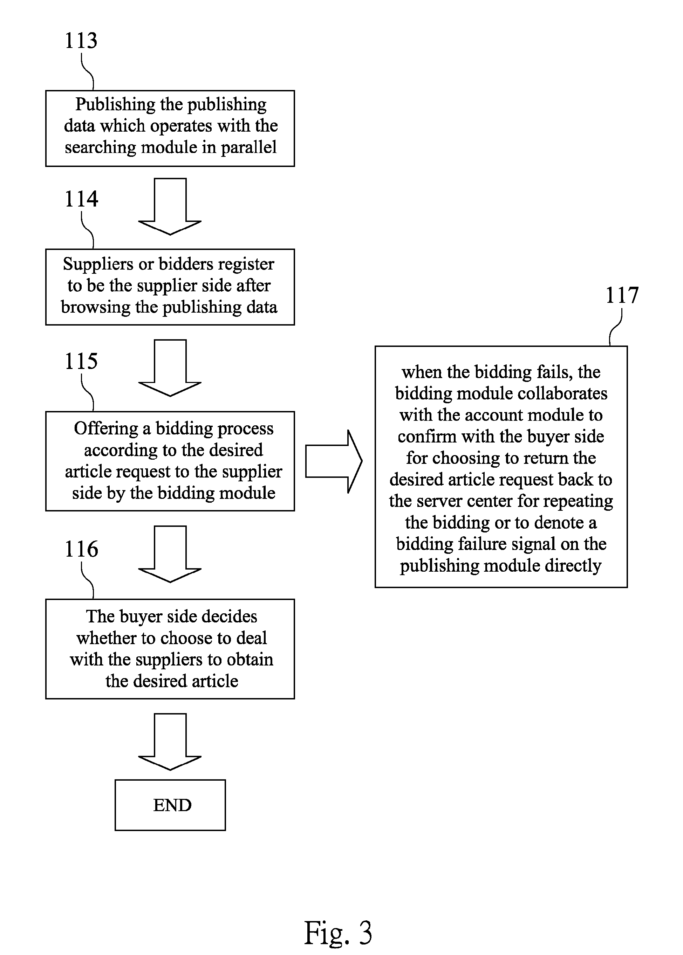

Fig. 3 shows a flowchart of the bidding process of the present disclosure. In regard with the aforementioned reverse auction system 100 of the present disclosure, the bidding module 600 for processing a bidding with respect to at least one supplier side according to the desired article request is connected to the publishing module 500. In more detail, referring to step 114, bidders as well as suppliers (sellers), may browse through the publishing data published by the publishing module 500. If any bidders are interested in registering as the supplier side B according to the desired article request(s) in the publishing data, the bidders can register their articles in the bidding module according to the desired article request(s) for further bidding process. The form of the content description of the article as known as the bidding subject provided by the supplier side B may be in video, audio, or text, in order to fully present its detail. In step 115, bids can be placed by one or multiple supplier side(s) B in a waiting period appointed by the buyer side A, and then, during the waiting period or while the waiting period is expired, the buyer side A can choose to accept one or multiple bids, and then end the auction (step 116). Alternatively, the buyer side A may also reject all of the bids if it is not interested in the bids at all, and thus ceasing the bidding process and the bidding process will be failed.

In step 117, when bidding fails, the bidding module collaborates with the account module 200 to confirm with the buyer side A for choosing to return the desired article request back to the server center 300 for repeating the bidding process, or to denote a bidding failure signal on the publishing module 500 directly.

It is worth to be mentioned that, the account module 200 is, optionally, allowed to charge fees from the buyer and/or the seller when the buyer chooses one or multiple bids. Similarly, the account module 200 is, optionally, allowed to charge fees from the buyer for an unpaid item, a failed bid, or a ceased bid.

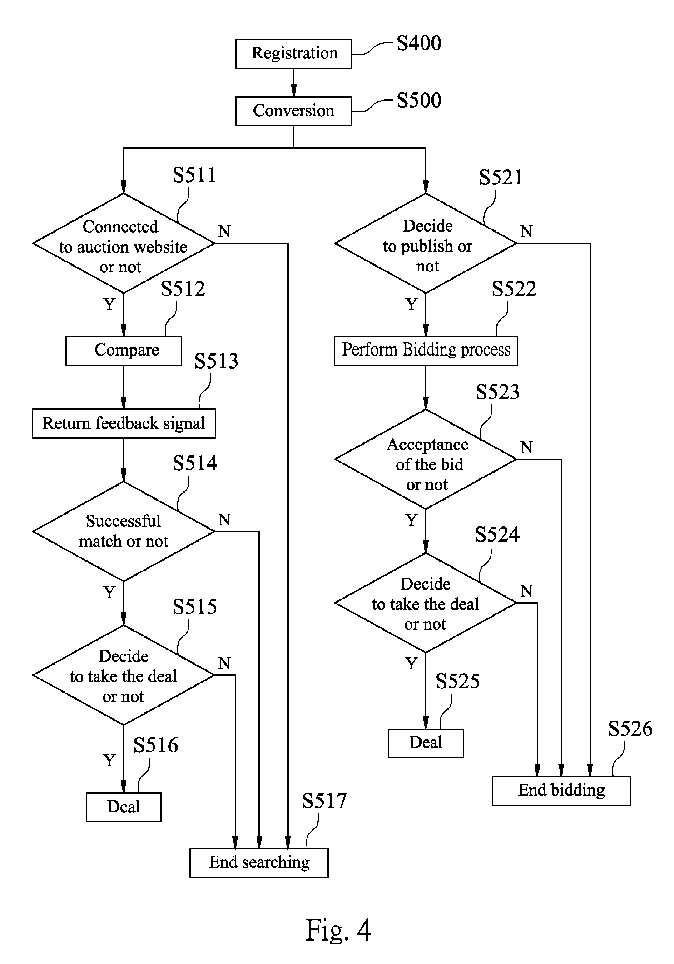

Fig. 4 is a flowchart illustrating another embodiment of the present disclosure. Firstly, in step S400 the user registers at and login to the account module 200 as the buyer in the networked computer environment, and the account module 200 will confirm whether the buyer has successfully registered to be the buyer side A. Optionally, the account module 200 may choose to charge the buyer for a register fee.

Since the buyer has been logged in to the system through the account module 200, the server 300 will start to request the buyer side A to provide and publish a request or to modify a published request of a desired article. Such requests of the desired articles can be presented as video clips, audio clips, or text descriptions for bring online reverse auctions into full play. Moreover, details of such requests can even be how long a tangible object has been used, the date of production of a tangible object, the name of a tangible or an intangible object, special descriptions of a tangible or an intangible object, video clips or audio clips of a tangible or an intangible object, and an expiry period of the request of the desired article. Then, in step S500, the server center 300 compiles and converts the requests of the desired articles into publishing data and searching data in a consistent format which conforms to Internet languages. Afterwards, slotting fees can be optionally charged from buyers by the account module 200.

In step S511, the searching module 400 connects to the server center 300 to acquire the searching data, and then the searching module 400 externally connects to one or multiple auction websites C, such as the uBid.com and the ebay. Next, in step S512, a comparison of similarities between the searching data and articles of auction websites C will be performed. Afterwards, in step S513, the comparison result will be converted into a feedback signal and returns to the buyer side A. In step S514, if a successful match occurs according to the feedback signal, then proceed on step S515; if none successful match occurs, then the searching process will be ended (step S517). Afterwards, in step S515, according to the comparison result, the buyer side A can choose to deal through a buying process (step S516), or to set another waiting period or another search criteria for another search. Furthermore, duration of the searching process can be extended depending on such a waiting period.

Referring back to step S500, the publishing module 500 acquires the publishing data from the server center 300 while connecting thereto. In step S521, the publishing data can be published as an announcement of interest to an announcement web page on the Internet by the publishing module 500 in a broadcast, a multicast, or a unicast manner. The abovementioned process of the publishing module 500 can be operated in parallel with the searching module 400. That is, if the searching module 400 is not working or not being operated, the publishing module 500 may still be operated normally and independently, and vise versa.

Bidders as well as suppliers (sellers), may browse through the publishing data published by the publishing module 500. If any bidders are interested in registering as the supplier side B according to the desired article request(s) in the publishing data, the bidders can register their articles in the bidding module according to the desired article request(s) for further bidding process (step S522). The form of the content description of the article as known as the bidding subject provided by the supplier side B may be in video, audio, or text, in order to fully present its detail. The articles offered by the supplier side B may be the same article according to the desired article request but in other types or other specifications; for instance, if the desired article is a rectangular beaker, the article offered by the supplier side B may be a square-shaped or ladder-shaped beaker, thus offering various options and choices to the buyer side A.

Bids can be placed by one or multiple supplier side(s) B in a waiting period appointed by the buyer side A, and then the buyer side A can choose either to accept the bids (step S523) and make a deal with the supplier side B (step S524 and step S525), or to end the auction (step S526). Alternatively, the buyer side A may also reject all of the bids if it is not interested in the bids at all, and thus ceasing the bidding process and the bidding process will be failed.

When the bidding fails, the bidding module collaborates with the account module 200 to confirm with the buyer side A for choosing to return the desired article request back to the server center 300 for repeating the bidding process, or to denote a bidding failure signal on the publishing module 500 directly.

The reverse auction method mentioned above executes the following steps by using a computer:
1. Registering or charging a desired article request from a buyer side in a networked computer environment.
2. Converting the desired article request into searching data and publishing data in the networked computer environment.
3. Connecting a searching module to at least one auction website in the networked computer environment, and, parallelly, publishing the publishing data by the publishing module. If none of the auction websites are connected to the searching module, the publishing module may still be operated normally and independently.
4. Performing a comparison in accordance with the searching data by collaborating the searching module with the auction website in the networked computer environment; browsing the publishing data by suppliers, bidders, and registering to be a supplier side afterwards.
5. Returning a feedback signal of the comparison result to the buyer side in the networked computer environment; deciding and choosing whether to accept the bids to make a valid bidding deal or to reject all of the bids and thus making the bidding fail during a bidding procedure in regard with the desired article.

By executing the reverse auction method mentioned above, the buyer of the present disclosure can effectively integrate various auction websites, such as the uBid.com, the ebay, and the yahoo bid etc., for their desired uses. Furthermore, the reverse auction method can effectively convert a desired article request into publishing data and then publish the publishing data on web. Since then, a wide range of specialized or personalized requirements can be performed, and users known as suppliers or bidders may browse through such requirements and decide to provide the desired article for the buyer. In addition, the desired article request of the method of the present disclosure can be tangible or intangible, furthermore, the desired article request can be presented as a video clip, an audio clip, or a text description. Thus, types of said requests can be variable for satisfying a wide range of kinds of requests from the buyer. For example, the desired article of buyers can be the morning air of an appointed time at an appointed location, or a red wine produced in an appointed year at an appointed location, etc. Therefore, the reverse auction system of the present disclosure fully utilizes the networked-computer environment; buyers don't have to waste a whole bunch of time on searching through variable websites to find the desired articles, but to acquire the source (the supplier) of the desired article straightly, rapidly, and easily.

The reverse auction method of the present disclosure can be performed as a computer program product and stored in a recordable media which is computer-readable. Said recordable media can be any type of storage devices or products which are computer-readable, like magnetic storage devices (such as read-only memory, floppy discs, hard disk drives, etc.), optically readable devices (such as optical read-only memory, digital compact discs, etc.), carriers (such as the transitions in the Internet), or flash memories (such as SSD hard disk, etc.). Plus, the computer-readable recordable media may be distributed to computers connected to the Internet, and those can also be encoded into computer-readable codes in order to be executed in any computers.

Although the present invention has been described in considerable detail with reference to certain embodiments thereof, other embodiments are possible. Therefore, the spirit and scope of the appended claims should not be limited to the description of the embodiments contained herein.

## Claims

1. A reverse auction system applicable to a networked computer based environment, the reverse auction system comprising:
an account module for registering or charging a desired article request from a buyer side;
a server center for converting the desired article request into publishing data and searching data;
a searching module connected to at least one auction website for collaborating therewith to perform comparison in accordance with the searching data, and then to return a feedback signal of a comparison result; and
a publishing module for publishing the publishing data, wherein the publishing module and the searching module operate in parallel.

2. The reverse auction system according to claim 1, further comprising:
a bidding module for offering a bidding process to the supplier side according to the desired article request.

3. The reverse auction system according to claim 2, wherein, when the bidding fails, the bidding module collaborates with the account module to confirm with the buyer side for choosing to return the desired article request back to the server center for repeating the bidding or to denote a bidding failure signal on the publishing module directly.

4. The reverse auction system according to claim 2, wherein the content of the bidding objects provided by the supplier side during the bidding process is presented in a form of a video clip, an audio clip, or a text description.

5. The reverse auction method according to claim 1, wherein the desired article request is a video clip, an audio clip, or a text description.

6. The reverse auction system according to claim 1, wherein the publishing module publishes the publishing data on an announcement web page on the server center.

7. The reverse auction system according to claim 1, wherein the searching data are submitted to the auction website via the searching module for performing comparison of similarities between the searching data and a plurality of articles of the auction website, and the feedback signal of the comparison result is returned from the auction website.

8. The reverse auction system according to claim 1, wherein the searching module is to submit the searching data to the auction website to perform comparison of similarities between the searching data and a plurality of articles of the auction website, and the feedback signal of the comparison result is returned from the auction website.

9. A reverse auction method, comprising:
registering or charging a desired article request from a buyer side in a networked computer environment;
converting the desired article request into searching data in the networked computer environment;
connecting a searching module to at least one auction website in the networked computer environment;
performing a comparison in accordance with the searching data by collaborating the searching module with the auction website in the networked computer environment; and
returning a feedback signal of comparison result to the buyer side in the networked computer environment.

10. The reverse auction method according to claim 9, wherein the desired article request of the buyer side is converted into publishing data, and the publishing data is published which operates with the searching module in parallel.

11. The reverse auction method according to claim 9, further comprising:
offering a bidding process to at least one supplier side according to the desired article request via a bidding module in the networked computer environment.

12. The reverse auction method according to claim 11, wherein the content of the bidding objects provided by the supplier side during the bidding process is presented in a form of a video clip, an audio clip, or a text description.

13. The reverse auction method according to claim 9, wherein the desired article request is a video clip, an audio clip, or a text description.

14. A computer program product performing and executing a reverse auction method according to claim 9 by a computer.

15. The computer program product according to claim 14, wherein the computer program product is stored in a recordable media.
